# FASCICULE DE BREVET EUROPEEN

(11) **EP 1 193 093 B1**
(45) Date de publication et mention de la délivrance du brevet: **09.08.2006**
(21) Numéro de dépôt: 01402516.7
(22) Date de dépôt: 28.09.2001
(51) Int. Cl.: B60J 7/14

(54) **Toit escamotable pour véhicule comprenant deux éléments rigides reliés entre eux par un système de leviers et biellettes**
Versenkbares Fahrzeugdach enthaltend zwei starre Teile miteinander verbunden durch eine Anordnung von Hebeln und Gestänge
Vehicle retractable roof comprising two rigid elements together connected by a system of leverage and links

(30) Priorité: 28.09.2000 FR 0012371
(43) Date de publication de la demande: 03.04.2002
(73) Titulaire: France Design, 79140 Le Pin (FR)
(72) Inventeur: Queveau, Gérard, 79140 Le Pin (FR); Guillez, Jean-Marc, 79140 Cirieres (FR)
(74) Mandataire: Geismar, Thierry

(56) Documents cités:
- EP-A- 0 936 095
- US-A- 2 704 225
- US-A- 3 775 464

## Description

La présente invention concerne un toit escamotable constitué par des éléments rigides permettant notamment de transformer un véhicule du type coupé, en un véhicule de type cabriolet.

On connaît de nombreux toits escamotables de ce type.

Dans certains cas, les éléments du toit sont adaptés pour pouvoir coulisser l'un sur l'autre et être déplacés dans le coffre arrière par des bras pivotants ou des glissières.

Dans d'autres cas, les éléments du toit sont articulés ensemble pour pouvoir se replier l'un sur l'autre.

On a notamment décrit dans le brevet européen EP-A-0936095 qui divulgue les caractéristiques du préambule de la revendication 1, un toit escamotable pour véhicule comprenant un élément de toit avant et un élément de toit arrière déplaçables entre une première position dans laquelle ces deux éléments recouvrent entièrement l'habitacle du véhicule et une seconde position dans laquelle ils sont rangés l'un sur l'autre dans le coffre arrière du véhicule.

L'élément arrière est relié de façon articulée à au moins un premier moyen de guidage constitué par un bras de commande fixé de façon articulée à la carrosserie du véhicule et associé à des moyens pour commander son pivotement vers le coffre et dans le sens inverse.

L'élément arrière coopère en outre avec un second bras pour guider le déplacement de l'élément arrière vers le coffre. L'élément avant est relié de façon articulée à deux leviers dont les extrémités opposées à l'élément avant sont reliées de façon articulée à une première biellette.

L'un de ces leviers étant en outre relié de façon articulée à une seconde biellette fixée de façon articulée au dit bras de commande.

Le mécanisme ci-dessus permet de soulever l'élément avant par rapport à l'élément arrière, puis après ouverture du coffre, de ranger ces éléments superposés l'un sur l'autre à l'intérieur du coffre.

Le toit escamotable ci-dessus est bien adapté pour des véhicules à deux places. En effet, dans ces véhicules le toit est relativement court.

Dans ce cas, les leviers supportant l'élément avant peuvent être relativement courts.

Dans le cas d'un véhicule à quatre places, les contraintes sont différentes, car le toit est relativement long.

De ce fait, si l'on désire que l'élément avant du toit s'étende le plus loin possible vers le pare-brise, cet élément doit être supporté par des leviers relativement longs. Cependant, dans ce cas, la longueur de ces leviers risque d'être excessive, en soulevant l'élément du toit à une hauteur trop importante par rapport aux normes.

Dans d'autres véhicules, le coffre arrière est encombré par des obstacles tels que des parties latérales de la carrosserie faisant saillie à l'intérieur pour loger des éléments de suspension. Si le sommet de ces obstacles est situé très près du couvercle du coffre, ceux-ci créent une difficulté supplémentaire pour loger un élément de toit de grande longueur.

Le but de la présente invention est de fournir une solution aux difficultés ci-dessus.

L'invention vise ainsi un toit escamotable pour véhicule comprenant un élément de toit avant et un élément de toit arrière déplaçables entre une première position dans laquelle ces deux éléments recouvrent entièrement l'habitacle du véhicule et une seconde position dans laquelle ils sont rangés l'un sur l'autre dans le coffre arrière du véhicule, l'élément arrière étant relié de façon articulée à au moins un premier moyen de guidage constitué par un bras de commande fixé de façon articulée à la carrosserie du véhicule et associé à des moyens pour commander son pivotement vers le coffre et dans le sens inverse, l'élément arrière coopérant en outre avec un second moyen de guidage pouvant être constitué par un second bras pour guider le déplacement de l'élément arrière vers le coffre, l'élément avant étant relié de façon articulée à deux leviers dont les extrémités opposées à l'élément avant sont reliées de façon articulée à une première biellette, l'un de ces leviers étant en outre relié de façon articulée à une seconde biellette fixée de façon articulée audit bras de commande.

Suivant l'invention, ce toit escamotable est caractérisé en ce que ladite première biellette est prolongée par une partie de biellette fixée de façon articulée à 1 'élément arrière et associée à l'extrémité dudit bras de commande située au-delà de son articulation audit élément arrière par des moyens de guidage permettant à l'élément de toit avant, de décrire une trajectoire prédéterminée indépendante de celle imposée à l'élément arrière par ledit bras de commande et ledit second moyen de guidage.

Grâce à cette partie prolongée de la première biellette reliée au bras de commande, il est possible de modifier la trajectoire de l'élément avant, par exemple en l'empêchant de monter trop, malgré la présence de leviers relativement longs nécessaires lorsque l'élément avant a lui-même une longueur importante.

Selon une version préférée de l'invention, le second moyen de guidage associé à l'élément arrière est constitué par une glissière s'étendant à l'intérieur du coffre arrière dans laquelle est engagé un galet ou analogue solidaire de l'élément arrière pour guider le déplacement de celui-ci à l'intérieur du coffre vers une position dans laquelle l'élément arrière occupe une position sensiblement horizontale, sous l'élément avant, ce dernier étant situé le plus près possible sous le couvercle du coffre.

L'utilisation d'une glissière en complément du bras de commande pour guider le déplacement de l'élément arrière vers le coffre, au lieu d'un second bras, présente l'avantage suivant :

La glissière peut avoir une forme prédéterminée afin d'optimiser la trajectoire de l'élément arrière en fonction des dimensions et formes du coffre, de la présence d'obstacles, etc...

De préférence également, ladite partie de biellette qui prolonge la première biellette comporte une glissière dans laquelle est engagé un doigt porté par l'extrémité du bras de commande du premier moyen de guidage.

Cette glissière confère au doigt porté par l'extrémité du bras de commande, une possibilité de déplacement qui modifie la trajectoire de l'élément avant.

D'autres particularités et avantages de l'invention apparaîtront encore dans la description ci-après.

Aux dessins annexés, donnés à titre d'exemples non limitatifs
La figure (1) est une vue schématique en coupe longitudinale partielle montrant un véhicule équipé d'un toit escamotable selon l'invention.
La figure (2) est une vue analogue à la figure (1) montrant le toit escamotable dans une position intermédiaire d'ouverture.
La figure (3) est une vue analogue aux figures (1 et 2), montrant le toit escamotable dans la position rangée dans le coffre arrière du véhicule.

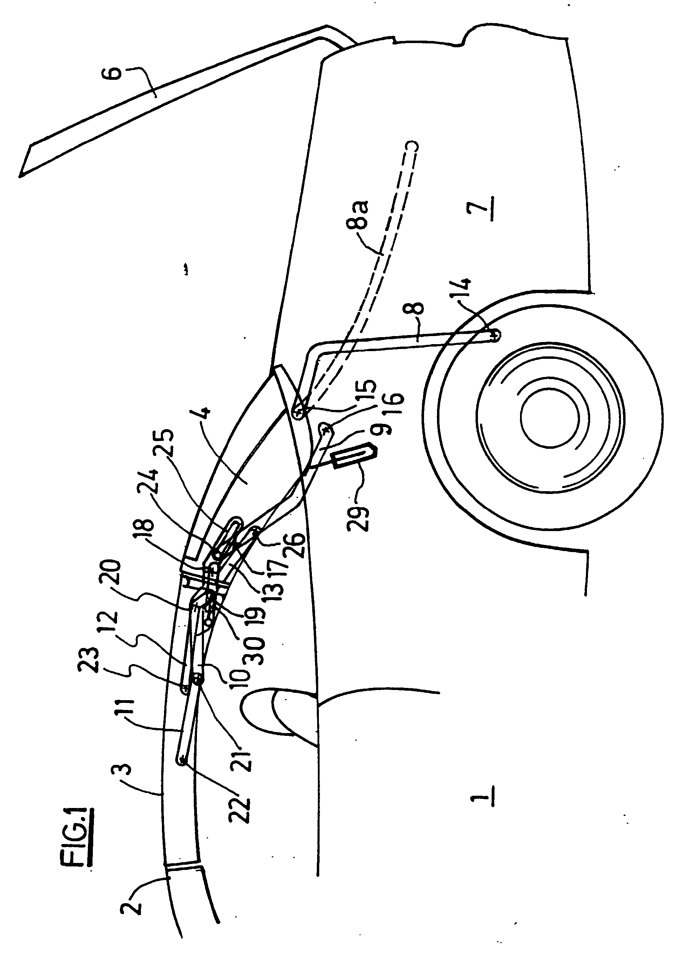

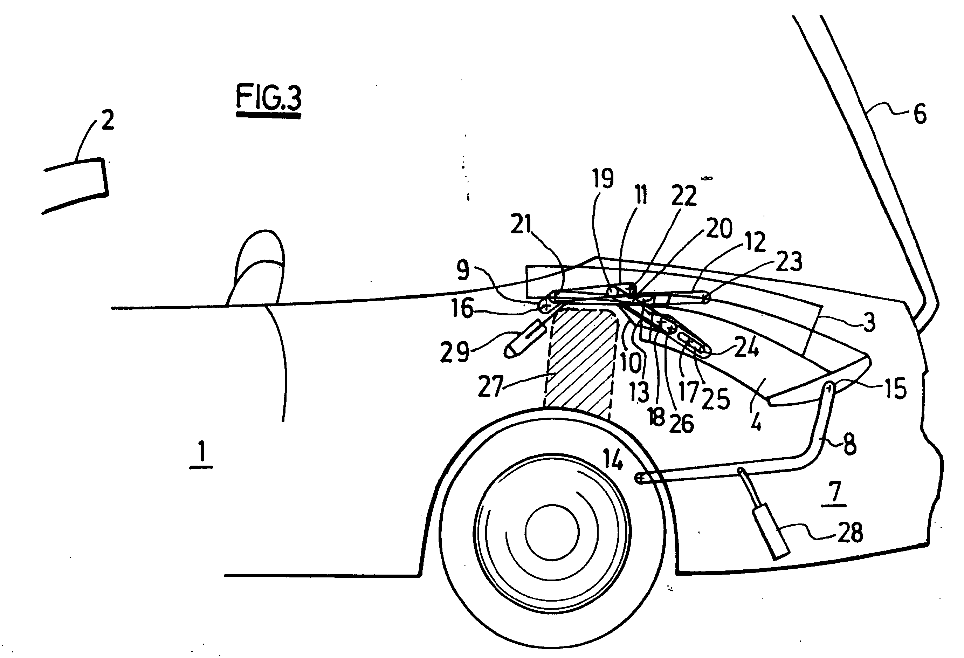

Dans l'exemple de réalisation des figures (1 à 3), le toit escamotable pour véhicule (1) comprend un élément de toit avant (3) formant le pavillon et un élément de toit arrière (4) formant la lunette arrière déplaçables entre une première position (voir figure 1) dans laquelle ces deux éléments (3 & 4) recouvrent entièrement l'habitacle du véhicule (1) et une seconde position (voir figure 3) dans laquelle ils sont rangés l'un sur l'autre dans le coffre arrière (7) du véhicule.

L'élément arrière (4) est relié de façon articulée en (17) à un premier moyen de guidage constitué par un bras de commande (9) fixé de façon articulée en (16) à la carrosserie du véhicule (1) et associé à des moyens pour commander son pivotement vers le coffre (7) et dans le sens inverse.

L'élément arrière coopère en outre avec un second moyen de guidage, constitué dans l'exemple représenté, par un second bras (8) pour guider le déplacement de l'élément arrière (4) vers le coffre (7).

L'élément avant (3) est relié de façon articulée en (22) et (23) à deux leviers (11, 12) dont les extrémités opposées à l'élément avant (3) sont reliées de façon articulée en (21) et (20) à une première biellette (10).

L'un (12) de ces leviers (11) et (12) est en outre relié de façon articulée en (19) à une seconde biellette (13) fixée de façon articulée en (26) au bras de commande (9).

Conformément à l'invention, la première biellette (10) est prolongée par une partie de biellette (10a) fixée de façon articulée en (18) à l'élément arrière (4).

La partie de biellette (10a) est associée à l'extrémité du bras de commande (9) située au-delà de son articulation (17) à l'élément arrière par des moyens de guidage (25) permettant à l'élément du toit avant (3) de décrire une trajectoire prédéterminée indépendante de celle imposée à l'élément arrière (4) par les bras (9) et (8).

Le second bras (8) est relié de façon articulée en (15) à l'élément arrière (4) et en (14) à la carrosserie.

Les articulations respectives (14, 15, 16, 17) des deux bras (8) et (9) forment un quadrilatère déformable.

Dans une version préférée de l'invention, le bras (8) est remplacé par une glissière (8a) (voir figure 1) s'étendant à l'intérieur du coffre arrière (7) dans laquelle est engagé un galet ou analogue fixé en (15) à l'arrière de l'élément arrière (4) pour guider le déplacement de celui-ci à l'intérieur du coffre (7) vers une position (voir figure 3) dans laquelle l'élément arrière (4) occupe une position sensiblement horizontale, sous l'élément avant (3), ce dernier étant situé le plus près possible sous le couvercle (6) du coffre.

La partie de biellette (10a) qui prolonge la première biellette (10) comporte une glissière (25) dans laquelle est engagé un doigt (24) porté par l'extrémité du bras de commande (9).

Cette glissière (25) est située entre l'articulation (18) de la partie de biellette (10a) à l'élément arrière (4) et l'extrémité libre de cette partie de biellette (10a)

Par ailleurs, la seconde biellette (13) est reliée au levier (12) qui est le plus proche du bras de commande (9).

De plus, le levier (12) porte une portion coudée (12a) située au-delà de son articulation (20) à la première biellette (10). L'extrémité de cette portion coudée (12a) est reliée de façon articulée (en 19) à la seconde biellette (13).

D'autre part, comme montré par les figures, au moins l'un (9) des bras (8, 9) reliés à l'élément arrière (4) et au moins l'un (12) des leviers (11, 12) reliés à l'élément avant (3) coopèrent avec des vérins de compensation (29, 30) pour équilibrer l'ensemble porté par les bras (8, 9) et leviers (11, 12) lors de son déplacement.

Comme montré par la figure 3, lorsque les éléments avant et arrière (3) et (4) sont rangés dans le coffre (7), l'élément avant (3) est situé au-dessus d'un obstacle (27) tel que les parties latérales de la carrosserie faisant saillie à l'intérieur du coffre dans lesquelles sont situés les éléments de suspension du véhicule.

La figure 3 montre également que le bras de commande (9), les leviers (11, 12) les biellettes (10, 13) sont toutes logées dans l'espace situé au-dessus de l'obstacle (27).

Dans la position montrée à la figure 1, l'élément avant (3) est verrouillé à la partie fixe (2) du toit proche du pare-brise, et à l'élément arrière (4). Ce dernier est également verrouillé à la carrosserie du véhicule (1).

Ces verrous peuvent être commandés au moyen d'un seul moteur et peuvent être du type de ceux décrits dans le brevet français No 2791 007 au nom de la demanderesse.

On va maintenant expliquer le fonctionnement du dispositif que l'on vient de décrire.

Une commande centralisée, commande simultanément le déverrouillage des verrous, l'ouverture du couvercle (6) du coffre et l'actionnement des moyens de commande du pivotement des bras (8) et (9). Ces moyens de commande peuvent être un vérin (28) actionnant le bras (8) ou un moteur électrique relié à l'articulation (14) ou (16) du bras (8) ou (9) ou tout autre moyen. Lorsque le bras (8) est remplacé par la glissière (8a), le vérin (28) ou autre moyen agit sur le bras (9).

Des moyens doivent être prévus pour que le couvercle (6) du coffre (7) puisse s'ouvrir de l'avant vers l'arrière, pour permettre l'entrée des éléments du toit dans le coffre. Le couvercle (6) doit également pouvoir s'ouvrir de l'arrière vers l'avant, pour permettre à l'utilisateur de ranger des bagages dans le coffre (7).

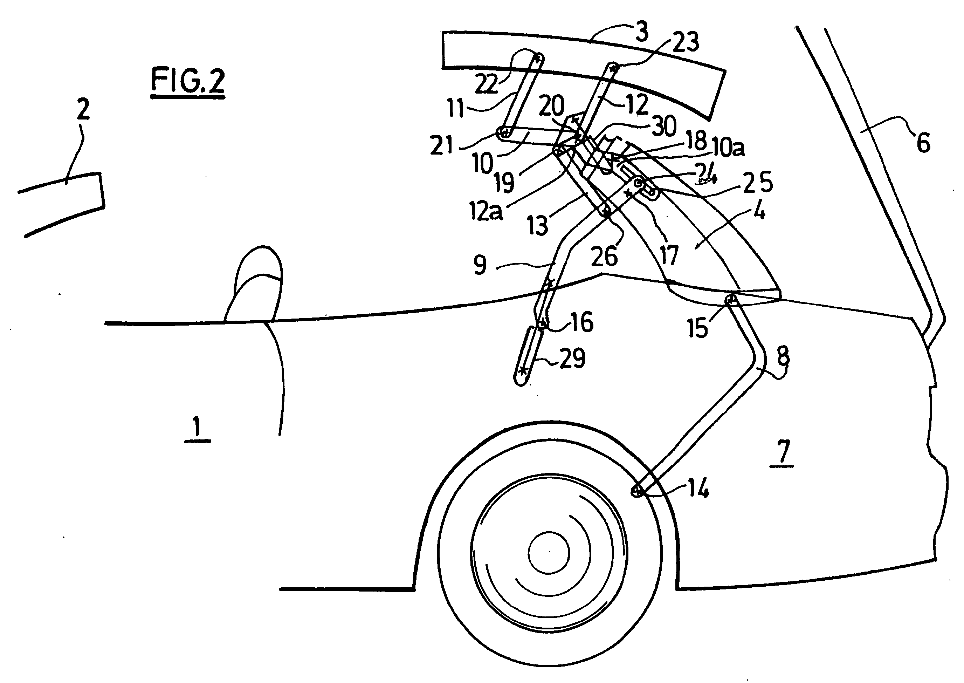

Le pivotement des bras (8) et (9) vers l'arrière entraîne dans ce mouvement les biellettes (10) et (13) et provoque le basculement vers le haut des leviers (11) et (12), comme indiqué sur la figure 2.

Dans une position intermédiaire, comme indiqué sur la figure (2), l'élément arrière (4) a reculé vers le coffre (7), l'élément avant (3) s'est détaché de la partie fixe (2), a reculé vers l'arrière en se soulevant progressivement et s'est placé au-dessus de l'élément arrière (4) en recouvrant partiellement ce dernier.

En fin de course, les deux éléments (3) et (4) sont superposés à la partie supérieure du coffre (7).

L'élément avant (3) nettement plus long que l'élément arrière (4) est situé près du couvercle 6 (dans sa position fermée) et est reculé au maximum vers l'avant du coffre en occupant la place disponible au-dessus de l'obstacle (27).

Dans cette position, il subsiste une place appréciable pour le rangement des bagages sous les éléments (3) et (4) et à l'arrière de ceux-ci.

## Revendications

1. Toit escamotable pour véhicule (1) comprenant un élément de toit avant (3) et un élément de toit arrière (4) déplaçables entre une première position dans laquelle ces deux éléments (3, 4) recouvrent entièrement l'habitacle du véhicule (1) et une seconde position dans laquelle ils sont rangés l'un sur l'autre dans le coffre arrière (7) du véhicule, l'élément arrière étant relié de façon articulée à au moins un premier moyen de guidage constitué par un bras de commande (9) fixé de façon articulée à la carrosserie du véhicule (1) et associé à des moyens pour commander son pivotement vers le coffre (7) et dans le sens inverse, l'élément arrière (4) coopérant en outre avec un second moyen de guidage pouvant être constitué par un second bras (8) pour guider le déplacement de l'élément arrière (4) vers le coffre (7), l'élément avant (3) étant relié de façon articulée à deux leviers (11, 12) dont les extrémités opposées à l'élément avant (3) sont reliées de façon articulée à une première biellette (10), l'un de ces leviers étant en outre relié de façon articulée à une seconde biellette (13) fixée de façon articulée audit bras de commande (9), **caractérisé en ce que** ladite première biellette (10) est prolongée par une partie de biellette (10a) fixée de façon articulée à l'élément arrière (4) et associée à l'extrémité dudit bras de commande (9) situé au-delà de son articulation (18) audit élément arrière (4) par des moyens de guidage (25) permettant à l'élément de toit avant (3) de décrire une trajectoire prédéterminée indépendante de celle imposée à l'élément arrière (4) par ledit bras de commande (9) et ledit second moyen de guidage (8).

2. Toit escamotable conforme à la revendication 1, **caractérisé en ce que** le second moyen de guidage associé à l'élément arrière (4) est un second bras (8) relié de façon articulée à cet élément arrière (4) et à la carrosserie, les articulations respectives (14, 15, 16, 17) des deux bras (8, 9) formant un quadrilatère déformable.

3. Toit escamotable conforme à la revendication 1, **caractérisé en ce que** le second moyen de guidage associé à l'élément arrière (4) s'étendant à l'intérieur du coffre arrière (7) est une glissière (8a) dans laquelle est engagé un galet ou analogue solidaire de l'élément arrière (4) pour guider le déplacement de celui-ci à l'intérieur du coffre (7) vers une position dans laquelle l'élément arrière (4) occupe une position sensiblement horizontale, sous l'élément avant (3), ce dernier étant situé le plus près possible sous le couvercle (6) du coffre (7).

4. Toit escamotable conforme à l'une des revendications 1 à 3, **caractérisé en ce que** ladite partie de biellette (10a) qui prolonge la première biellette (10) comporte une glissière (25) dans laquelle est engagé un doigt (24) porté par l'extrémité du bras de commande (9) dudit premier moyen de guidage.

5. Toit escamotable conforme à la revendication 4, **caractérisé en ce que** ladite glissière (25) est située entre l'articulation (18) de ladite partie de biellette (10a) à l'élément arrière (4) et l'extrémité libre de cette partie de biellette (10a).

6. Toit escamotable conforme à l'une des revendications 1 à 5, **caractérisé en ce que** ladite seconde biellette (13) est reliée au levier (12) qui est le plus proche dudit bras de commande (9).

7. Toit escamotable conforme à la revendication 6, **caractérisé en ce que** ledit levier (12) Le plus proche dudit bras de commande (9) dudit premier moyen de guidage porte une portion coudée (12a) située au-delà de son articulation (20) à ladite première biellette (10) l'extrémité de cette portion coudée (12a) étant reliée de façon articulée à la seconde biellette (13).

8. Toit escamotable conforme à l'une des revendications 1, 2 ou 4 à 7 quand ces dernières ont comme second moyen de guidage un second bras (8), **caractérisé en ce que** au moins l'un des bras (8, 9) reliés à l'élément arrière (4) et au moins l'un des leviers (11, 12) reliés à l'élément avant (3) coopèrent avec des vérins de compensation (29, 30) pour équilibrer l'ensemble porté par les bras (8, 9) reliés à l'élément arrière (4) et leviers reliés à l'élément avant (3) (11, 12) lors de son déplacement.

9. Toit escamotable conforme à l'une des revendications 1 à 8, **caractérisé en ce que** lorsque les éléments avant et arrière (3, 4) sont rangés dans le coffre (7) l'élément avant (3) est situé au-dessus d'un obstacle (27) tel que les parties latérales de la carrosserie faisant saillie à l'intérieur du coffre (7) dans lesquelles sont situés les éléments de suspension du véhicule.

10. Toit escamotable conforme à la revendication 9, **caractérisé en ce que** le bras de commande (9) dudit premier moyen de guidage, les leviers (11 , 12 ) reliés à l'élément avant (3), les première et seconde biellettes (10, 13) sont logés dans l'espace situé au-dessus dudit obstacle (27).

## Claims

1. Retractable roof for a vehicle (1) comprising a front roof element (3) and a rear roof element (4) that can move between a first position in which these two elements (3, 4) completely cover the passenger compartment of the vehicle (1) and a second position in which they are stored on top of each other in the rear boot (7) of the vehicle, the rear element being connected in an articulated fashion to at least one first guiding system consisting of a control arm (9) fixed in an articulated fashion to the body of the vehicle (1) and connected to means for controlling its swinging towards the boot (7) and in the opposite direction, the rear element (4) also cooperating with a second guiding system that can consist of a second arm (8) for controlling the movement of the rear element (4) towards the boot (7), the front element (3) being connected in an articulated fashion to two levers (11, 12) in which the ends opposite the front element (3) are connected in an articulated fashion to a first connecting rod (10), one of these levers also being connected in an articulated fashion to a second connecting rod (13) fixed in an articulated fashion to said control arm (9), **characterised in that** said first connecting rod (10) is extended by a part of the connecting rod (10a) fixed in an articulated fashion to the rear element (4) and connected to the end of said control arm (9) situated beyond its connection (18) to said rear element (4) by means of guiding systems (25) that allow the front roof element (3) to follow a predetermined path regardless of that imposed on the rear element (4) by said control arm (9) and said second guiding system (8).

2. Retractable roof according to claim 1, **characterised in that** the second guiding system connected to the rear element (4) is a second arm (8) connected in an articulated fashion to this rear element (4) and to the body, the respective joints (14, 15, 16, 17) of the two arms (8, 9) forming a deformable quadrilateral.

3. Retractable roof according to claim 1, **characterised in that** the second guiding system associated with the rear element (4) extending inside the rear boot (7) is a rail (8a) in which a roller or a similar element solidly attached to the rear element (4) is inserted in order to guide the movement of said element inside the boot (7) towards a position in which the rear element (4) occupies a substantially horizontal position under the front element (3), the latter being located as closely as possible to the underside of the lid (6) of the boot (7).

4. Retractable roof according to one of the claims from 1 to 3, **characterised in that** said part of the connecting rod (10a) that is an extension of the first connecting rod (10) comprises a rail (25) in which a finger (24) supported by the end of the control arm (9) of said first guiding system is inserted.

5. Retractable roof according to claim 4, **characterised in that** said rail (25) is situated between the joint (18) of said part of the connecting rod (10a) and the rear element (4) and the free end of this part of the connecting rod (10a).

6. Retractable roof according to one of the claims from 1 to 5, **characterised in that** said second connecting rod (13) is connected to the lever (12) that is closest to said control arm (9).

7. Retractable roof according to claim 6, **characterised in that** said lever (12) that is closest to said control arm (9) of said first guiding system has a section bent at an angle (12a) located beyond its joint (20) with the first connecting rod (10), the end of said bent section (12a) being connected in an articulated fashion to the second connecting rod (13).

8. Retractable roof according to one of the claims 1, 2 or 4 to 7, when the second guiding system in the latter is a second arm (8), **characterised in that** at least one of the arms (8, 9) connected to the rear element (4) and at least one of the levers (11, 12) connected to the front element (3) cooperate with compensating cylinders (29, 30) so as to balance the assembly supported by the arms (8, 9) connected to the rear element (4) and the levers (11, 12) connected to the front element (3) during its movement.

9. Retractable roof according to one of the claims 1 to 8, **characterised in that**, when the front and rear elements (8, 9) are stored in the boot (7), the front element (3) is located above an obstacle (27) such as the side parts of the body that project into the boot (7) in which the suspension elements of the vehicle are situated.

10. Retractable roof according to claim 9, **characterised in that** the control arm (9) of said first guiding system, the levers (11, 12) connected to the front element (3) and the first and second connecting rods (10, 13) are stored in the space situated above said obstacle (27).

## Patentansprüche

1. Schiebedach eines Fahrzeugs (1), das ein vorderes Dachelement (3) und ein hinteres Dachelement (4) umfasst, das zwischen einer ersten Position, in der diese beiden Elemente (3, 4) vollständig den Fahrzeuginnenraum (1) bedecken, und einer zweiten Position, in der sie im Kofferraum des Fahrzeugs (7) übereinander geschoben sind, verschiebbar ist, wobei das hintere Elemente beweglich mit mindestens einem ersten Führungsmittel verbunden ist, das aus einem Betätigungsarm (9) besteht, der beweglich mit der Karosserie des Fahrzeugs (1) verbunden ist und mit Mitteln zur Betätigung des Schwenkens zum Kofferraum (7) hin und in umgekehrter Richtung verbunden ist, wobei das hintere Element (4) ferner mit einem zweiten Führungsmittel zusammenwirkt, das aus einem zweiten Arm (8) zur Führung der Bewegung des hinteren Elements (4) zum Kofferraum (7) hin bestehen kann, wobei das vordere Element (3) beweglich mit zwei Hebeln (11, 12) verbunden ist, deren Enden, die dem vorderen Element (3) gegenüberstehen, beweglich mit einer ersten Pleuelstange (10) verbunden sind, wobei einer dieser Hebel ferner beweglich mit einer zweiten Pleuelstange (13) verbunden ist, die beweglich mit dem betreffendem Betätigungsarm (9) verbunden ist, **dadurch gekennzeichnet, dass** besagte erste Pleuelstange (10) durch einen Pleuelstangenteil (10a) verlängert wird, der beweglich mit dem hinteren Element (4) verbunden ist und am Ende besagten Betätigungsarms (9) auf der anderen Seite seines Gelenks (18) durch Führungsmittel (25) mit besagtem hinteren Element (4) verbunden ist, wodurch das vordere Dachelement (3) einen vorgegebenen Weg unabhängig vom Weg des hinteren Elements (4), der durch den Betätigungsarm (9) und besagtes zweites Führungsmittel (8) festgelegt ist, beschreiben kann.

2. Schiebedach nach Patentanspruch 1, **dadurch gekennzeichnet, dass** das zweite Führungsmittel, das mit dem hinteren Element (4) verbunden ist, ein zweiter Arm (8) ist, der beweglich mit diesem hinteren Element (4) und der Karosserie verbunden ist, wobei die jeweiligen Gelenke (14, 15, 16, 17) der beiden Arme (8, 9) ein verformbares Viereck bilden.

3. Schiebedach nach Patentanspruch 1, **dadurch gekennzeichnet, dass** das zweite Führungsmittel, das mit dem sich im Kofferraum (7) erstreckenden hinteren Element (4) verbunden ist, eine Schiene (8a) ist, in welche eine Rolle oder ähnliches eingesetzt ist, die fest mit dem hinteren Element (4) verbunden ist, um die Verschiebung desselben im Kofferraum (7) zu führen, so dass das hintere Element (4) unter dem vorderen Element (3) eine deutlich waagrechte Position einnimmt, wobei sich letzteres so nah wie möglich unter dem Deckel (6) des Kofferraums (7) befindet.

4. Schiebedach nach einem der Patentansprüche 1 bis 3, **dadurch gekennzeichnet, dass** besagter Pleuelstangenteil (10a), welcher die erste Pleuelstange (10) verlängert, eine Schiene (25) umfasst, in die ein Stift (24) eingeführt ist, welcher vom Ende des Betätigungsarms (9) des betreffenden ersten Führungsmittels getragen wird.

5. Schiebedach nach Patentanspruch 4, **dadurch gekennzeichnet, dass** sich besagte Schiene (25) zwischen dem Gelenk (18) des besagten Pleuelstangenteils (10a) und dem hinteren Element (4) am freien Ende dieses Pleuelstangenteils (10a) befindet.

6. Schiebedach nach einem der Patentansprüche 1 bis 5, **dadurch gekennzeichnet, dass** die besagte zweite Pleuelstange (13) mit dem Hebel (12) verbunden ist, der dem Betätigungsarm (9) am nächsten ist.

7. Schiebedach nach Patentanspruch 6, **dadurch gekennzeichnet, dass** besagter Hebel (12), der dem besagten Betätigungsarm (9) des betreffenden ersten Führungsmittels am nächsten ist, einen geknickten Abschnitt (12a) stützt, der sich auf der anderen Seite seines Gelenks (20) an besagter Pleuelstange (10) befindet, wobei das Ende dieses geknickten Abschnitts (12a) beweglich mit der zweiten Pleuelstange (13) verbunden ist.

8. Schiebedach gemäß Patentanspruch 1, 2 oder 4 bis 7, wenn letzteres als zweites Führungsmittel einen zweiten Arm (8) aufweisen, **dadurch gekennzeichnet, dass** mindestens einer der Arme (8, 9), die mit dem hinteren Element (4) verbunden sind, und mindestens einer der Hebel (11, 12), die mit dem vorderen Element (3) verbunden sind, mit Ausgleichszylindern (29, 30) zusammenwirken, um die von den Armen (8, 9), die mit dem hinteren Element (4) verbunden sind, und den Hebeln (11, 12), die mit dem vorderen Element (3) verbunden sind, getragene Einheit während ihrer bewegung zu stabilisieren.

9. Schiebedach nach einem der Patentansprüche 1 bis 8, **dadurch gekennzeichnet, dass** wenn das vordere und das hintere Element (3, 4) im Kofferraum (7) verstaut ist, das vordere Element (3) sich über einem Hindernis (27), wie z.B. den im Innern des Kofferraums (7) vorspringenden Seitenteilen der Karosserie befindet, in denen sich die Aufhängungselemente des Fahrzeugs befinden.

10. Schiebedach nach Patentanspruch 9, **dadurch gekennzeichnet, dass** der Betätigungsarm (9) des ersten Führungsmittels, die mit dem vorderen Element (3) verbundenen Hebel (11, 12), die erste und die zweite Pleuelstange (10, 13) im Raum über besagtem Hindernis (27) aufgenommen werden.
